# EUROPEAN PATENT APPLICATION

(11) **EP 4 027 606 A1**
(43) Date of publication of application: **13.07.2022**
(21) Application number: 21150972.4
(22) Date of filing: 11.01.2021
(51) Int. Cl.: H04L 29/06, H04L 12/58, H04L 29/08, H04W 4/14

(54) **DELIVERY OF NOTIFICATIONS TO MOBILE DEVICES**

(71) Applicant: Google LLC, Mountain View, CA 94043 (US)
(72) Inventor: González Sánchez, Jonathan, 8002 Zurich (CH); Sharma, Arindam, 8002 Zurich (CH)
(74) Representative: Suckling, Andrew Michael

(57) **Abstract**

Implementations described herein relate to methods, systems, and computer-readable media to securely deliver notifications to mobile devices. In some implementations, a computer-implemented method includes receiving, at a recipient device, a message from a wireless carrier, the message including a notification from an application server. The method further includes decrypting the message using a private key stored locally at the recipient device. The method further includes identifying a software application that executes on the recipient device that is associated with the decrypted message, wherein the decrypted message includes the notification. The method further includes delivering the decrypted message to the software application.

## Description

### BACKGROUND

Notifications are a common feature of modern software applications that execute on devices such as smartphones, tablets, wearable devices, laptops, etc. In many cases, notifications are generated by a server and provided to the application executing on a device over the Internet. To ensure secure message delivery, the application may utilize a secure connection with such a server, e.g., a Transport Layer Security (TLS) connection.

On mobile devices that are coupled to a wireless carrier network for data and voice communication via the wireless carrier network, establishing and maintaining such a connection may require substantial resources. For example, wireless carrier systems (e.g., that utilize network address translation) may close a secure connection (e.g., TLS connection) that is inactive. In such a case, an application is required to re-establish the secure connection with the server in order to receive notifications.

A mechanism to ensure that the secure connection is not closed is for the application to generate and send regular keep-alive messages to the server over the Internet. However, sending such messages requires that the radio transmitter of the mobile device is active, which wastes power, and on battery-powered devices, causes battery drain. While the application can be configured to connect to the server periodically, e.g., once every few minutes, to reduce power usage, this can degrade the user experience, since notification delivery may be delayed and can only take place at the periodicity at which the secure connection is established. Further, keep-alive messages received from multiple devices coupled to the wireless carrier network, can also lead to cellular congestion.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

Implementations described herein relate to methods, systems, and computer-readable media to securely deliver notifications to mobile devices.

In some implementations, a computer-implemented method includes receiving, at a recipient device, a message from a wireless carrier, the message including a notification from an application server. The method further includes decrypting the message using a private key stored locally at the recipient device. The method further includes identifying a software application that executes on the recipient device that is associated with the decrypted message, wherein the decrypted message includes the notification. The method further includes delivering the decrypted message to the software application.

In some implementations, the recipient device may be a wireless device coupled to a cellular network operated by the wireless carrier and receiving the message includes receiving the message over Rich Communication Services (RCS) protocol. In some implementations, the message may be received as a session initiation protocol (SIP) message. In some implementations, the SIP message may be a SIP OPTIONS message. In these implementations, the notification may be included in the content body of the SIP OPTIONS message.

In some implementations, the message may be received at a network access layer of the recipient device via a device modem in communication with the wireless carrier. In these implementations, no active connection exists between the software application and the application server.

In some implementations, the method may further include, after the decrypting, sending an acknowledgment message to the wireless carrier.

In some implementations, the method may further include, prior to receiving the message, generating, at the recipient device, a cryptographic key pair that includes a public key and a private key; storing the private key in local storage of the recipient device; and transmitting a registration message that includes the public key to a message delivery server over the Internet. In some implementations, the registration message may further include a token associated with the software application. In these implementations, identifying the software application may be based on determining that a received token in the decrypted message matches the token associated with the software application.

In some implementations, a device may include a processor, a modem operable to couple the device to a wireless carrier, and a memory coupled to the processor, with instructions stored thereon that, when executed by the processor, cause the processor to perform operations that include receiving a message from a wireless carrier, the message including a notification from an application server; decrypting the message using a private key; identifying a software application that is associated with the decrypted message, wherein the decrypted message includes the notification; and delivering the decrypted message to the software application.

In some implementations, the device may be coupled to a cellular network operated by the wireless carrier, and receiving the message includes receiving the message over Rich Communication Services (RCS) protocol. In some implementations, the message may be received as a session initiation protocol (SIP) message. In some implementations, the message may be received at a network access layer of the device via the modem in communication with the wireless carrier, and wherein no active connection exists between the software application and the application server.

In some implementations, the operations may further comprise, prior to receiving the message, generating a cryptographic key pair that includes a public key and a private key; storing the private key in local storage of the device; and transmitting a registration message that includes the public key to a message delivery server over the Internet.

In some implementations, a computer-implemented method to deliver a message includes receiving, at a message delivery server, a notification from an application server. The method further includes determining that a recipient of the notification is associated with a public key stored at the message delivery server, the public key associated with a recipient device. The method further includes, responsive to determination that the recipient is associated with the public key, generating the message by encrypting the notification with the public key. The method further includes transmitting the message to a wireless carrier for delivery to the recipient device.

In some implementations, the recipient device may be a wireless device coupled to a cellular network operated by the wireless carrier, and the delivery of the message to the recipient is over Rich Communication Services (RCS) protocol. In some implementations, the message delivery server and the wireless carrier may maintain a peering connection for RCS.

In some implementations, the method may further include transmitting the notification to one or more other recipient devices over the Internet.

In some implementations, the method may further include, prior to receiving the notification, receiving, at the message delivery server, a registration message from the recipient device, wherein the registration message includes the public key and a recipient identifier. In some implementations, determining that the recipient of the notification is associated with the public key may be based on determining that the recipient matches the recipient identifier. In some implementations, the recipient device may execute a software application and wherein the recipient identifier may be a token associated with the software application.

### BRIEF DESCRIPTION OF THE DRAWINGS

Fig. 1 is a block diagram of an example network environment which may be used for one or more implementations described herein.
Fig. 2 is a flow diagram that illustrates an example method to register a device to receive notifications, according to some implementations.
Fig. 3 is a flow diagram that illustrates an example method to receive notifications at a device, according to some implementations.
Fig. 4 is a flow diagram that illustrates delivery of a notification, according to some implementations.
Fig. 5 is a block diagram of an example computing device which may be used to implement one or more features described herein.

### DETAILED DESCRIPTION

Methods, systems, and computer-readable media (which may be but are not limited to non-transitory computer-readable media) are described herein for message delivery to a client device via a wireless carrier (over the network access layer). The message may include notifications for an application that executes on the client device. Per the described techniques, a device is registered with the wireless carrier for delivery of messages that include app notifications via the wireless carrier.

The described techniques address technical drawbacks of notification techniques that establish and maintain a secure connection between a client device and a message delivery server that delivers notifications generated by an application server to the client device, or between the client device and the application server. Such notification techniques typically use an over the top (OTT) Transport Layer Security (TLS) connection over the Internet Public Data Network (PDN).

A technical problem with such a configuration is that network address translation (NAT) timeouts on a wireless carrier backend may occur and lead to closing of the secure connection due to inactivity, e.g., no interaction between the client device and the wireless carrier system over the secure connection for a period greater than a threshold set by the wireless carrier. To avoid such closure of connection, it is required that the client device (e.g., an application that receives notifications) sends a periodic keep-alive message. Sending such a message requires waking up the radio transmitter (and associated circuitry, including a client device modem). Such wake up and use of the radio transmitter can waste power. On battery-powered devices, such activity can drain the device battery. Further, the keep-alive messages can lead to cellular network congestion for the wireless carrier.

Methods, systems, and non-transitory computer-readable media described herein techniques utilize single-registration messaging (further described below) between a client device (e.g., a mobile phone or other cellular communications device) and a wireless carrier system to deliver messages (e.g., that include app notifications). Single-registration messaging is a mechanism that leverages the IP Multimedia (core network) Subsystem PDN (IMS PDN) for a client device to register with a wireless carrier system and to keep the connection open (without requiring expensive keep-alives that require the client device to wake up periodically). For example, the Rich Communication Services (RCS) protocol may be used for message delivery.

Wireless carriers typically share the client device registration (e.g., for communication between the client device and the wireless carrier system via Voice-over-LTE (Long Term Evolution) and RCS registration over a single IP Security (IPSec) socket over the IP Multimedia (core network) Subsystem PDN (IMS PDN)). The client device maintains the connection to the IMS network for cellular communications.

Per techniques described herein, upon successful device registration, such a connection between the device and the IMS network is utilized for message delivery to applications on a client device. By eliminating the overhead of establishing a TLS (or other secure OTT connection) and keeping it alive, the described techniques eliminate the need to periodically wake up the client device or send messages, thereby lowering power consumption, improving battery life, and reducing network congestion on the wireless (cellular) network. Also, the described techniques can improve reliability and performance of notification delivery when the client device has sub-optimal Internet connectivity.

Further, an important advantage of the IMS network is that it does not have network address translation and is deployed over Internet Protocol version 6 (IPv6). The described techniques make advantageous use of this feature of the IMS PDN by performing device registration that allows delivery of app notifications reliably. A technical problem with message delivery via IMS PDN is that IMS PDN is often deployed in a firewalled environment, that disallows direct connection to application servers and/or message delivery servers. Further, a device operating system of a client device may have limited exposure to the IMS PDN, as this connection may be managed by client device hardware, e.g., the device modem. The described techniques overcome this problem by utilizing device registration.

The described techniques advantageously use public key cryptography to ensure that app notifications are sent securely over the wireless carrier network, without requiring establishment of a secure OTT connection. In particular, a client device provides a public key for use by a message delivery server (or other server that generates the notification) to encrypt a notification. The encrypted message can be sent over a regular communication channel (e.g., unencrypted) without compromising the security of the message content (e.g., app notification). A private key that is stored securely on the client device is utilized to decrypt the message, retrieve the notification, and provide it to a respective application on the client device.

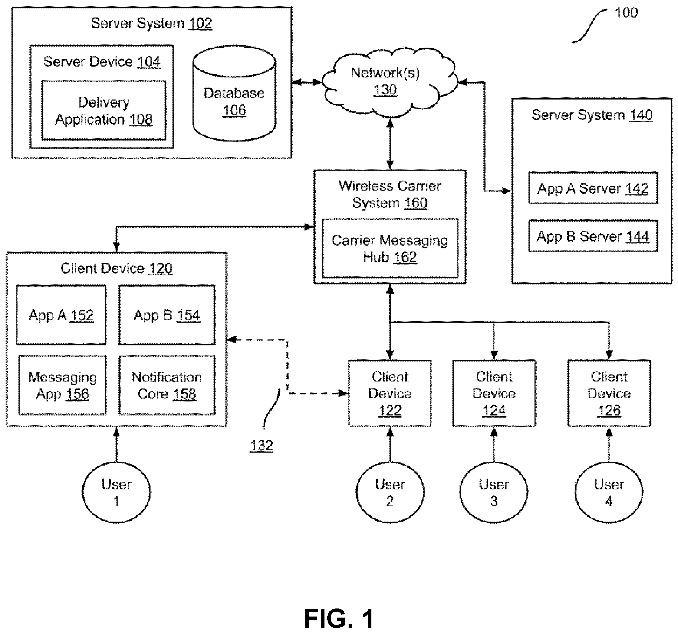

Fig. 1 illustrates a block diagram of an example network environment 100, which may be used in some implementations described herein. In some implementations, network environment 100 includes one or more server systems, e.g., server system 102 and second server system 140 in the example of Fig. 1. Server systems 102 and 140 can communicate with a network 130, for example. Server system 102 can include a server device 104 and a database 106 or other storage device. In some implementations, server device 104 may provide a message delivery application 108. Second server system 140 can include one or more application servers, e.g., app A server 142 and app B server 144.

Message delivery application 108 may be configured in communication with one or more application servers, e.g., App A server 142, App B server 144, over network 130. For example, the application servers may be configured to generate notifications to be sent to one or more client devices and may send the notifications to message delivery server 104 which may perform the message delivery. In some implementations, message delivery application 108 may be implemented as a cloud-based messaging service. Message delivery application 108 may enable an application server to send a notification to an app on a client device (e.g., app A 152, app B 154). For example, if app A is an email application, the notification may indicate that new email messages or other data are available for app A. In another example, if app B is a shopping app, the notification may alert a user of an offer or a coupon, provide a status update on an order, etc. In various implementations, notifications can include text, graphics (e.g., images, videos, etc.), or other content.

Network environment 100 also can include one or more client devices, e.g., client devices 120, 122, 124, and 126, which may communicate with each other and/or with server system 102 and/or second server system 140 via network 130. Client devices 120-126 may be coupled to a cellular network operated by a wireless carrier, e.g., wireless carrier system (160). In some implementations, client devices 120-126 may be configured to send and receive messages over Rich Communication Services (RCS) protocol via the cellular network.

Network 130 can be any type of communication network, e.g., the Internet or a wide area network. In some implementations, two or more client devices may be configured to conduct peer-to-peer communication, e.g., using peer-to-peer wireless protocols (e.g., Bluetooth^{®}, Wi-Fi Direct, etc.), etc. One example of peer-to-peer communications between two client devices 120 and 122 is shown by arrow 132.

Network environment 100 also includes a wireless carrier system 160 coupled to the network 130. Wireless carrier system 160 may include cellular service infrastructure, e.g., that enables any of client devices 120-126 to communicate with the wireless carrier system 160 via cellular connections. In some implementations, the cellular connection may be a Long Term Evolution (LTE) connection, a 5G connection, etc. In various implementations, client devices 120-126 may maintain connectivity with wireless carrier system 160 via a network access layer. For example, a client device can maintain an active connection to the wireless carrier system 160 (carrier backend) over a 4G or 5G network, or via an ePDG (evolved Packet Data Gateway connection, e.g., when connected to a wireless access point (WiFi AP). In either case, the connection with the wireless carrier system 160 is over IP Security (IPSec) and therefore, is trusted and encrypted. When a client device is connected over a 4G or 5G network, no keep-alive message is necessary. When a client device is connected via a wireless AP (WiFi), the device modem sends a keep-alive on the IPSec channel, without waking up the rest of the device. Since the IPSec channel is maintained for Voice over WiFi (VoWiFi), the keep-alive messages sent by the modem do not cause additional burden on the client device or the wireless carrier network.

Wireless carrier system 160 may include a carrier messaging hub 162. For example, carrier messaging hub 162 may include one or more server devices. In some implementations,, carrier messaging hub may establish a peering connection with a server device 104 that executes message delivery application 108. The peering connection may enable efficient and quick relaying of messages from the message delivery application to a client device via the carrier messaging hub. Wireless carrier system 160 is coupled to server device 104 and server system 140 via network 130, e.g., the Internet or other wide-area network.

For ease of illustration, Fig. 1 shows one block for server system 102, server device 104, database 106, second server system 140, app A server 142, and app B server 144, and shows four blocks for client devices 120, 122, 124, and 126. Server blocks 102, 104, 106, 140, 142, and 144 may represent multiple systems, server devices, and network databases, and the blocks can be provided in different configurations than shown. For example, server system 102 and/or second server system 140 can represent multiple server systems that can communicate with other server systems via the network 130. In some implementations, server system 102 and/or second server system 140 can include cloud hosting servers, for example. In some examples, database 106 and/or other storage devices can be provided in server system block(s) that are separate from server device 104 and can communicate with server device 104 and other server systems via network 130. In some implementations, multiple applications may run on the same server, e.g., app A server 142 may run additional applications, or a single application may span multiple servers, e.g., in a distributed configuration.

Also, there may be any number of client devices. Each client device can be any type of electronic device, e.g., desktop computer, laptop computer, portable or mobile device, cell phone, smart phone, tablet computer, television, TV set top box or entertainment device, wearable devices (e.g., display glasses or goggles, wristwatch, headset, armband, jewelry, etc.), personal digital assistant (PDA), media player, game device, etc. Some client devices may also have a local database similar to database 106 or other storage. In some implementations, network environment 100 may not have all of the components shown and/or may have other elements including other types of elements instead of, or in addition to, those described herein.

In various implementations, end-users User1, User2, User3, and User4 may communicate with server system 102 and/or each other using respective client devices 120, 122, 124, and 126. In some examples, users User1, User2, User3, and User4 may interact with each other via applications running on respective client devices and/or server system 102 or second server system 140, and/or via a network service, e.g., a social network service or other type of network service, implemented on server system 102 or second server system 140. For example, respective client devices 120, 122, 124, and 126 may communicate data to and from one or more server systems (e.g., system 102, second server system 140).

In some implementations, the server system 102 and/or second server system 140 may provide appropriate data to the client devices such that each client device can receive communicated content or shared content uploaded to the server system 102 or second server system 140 and/or network service. In some examples, users Userl-User4 can interact via audio or video conferencing, audio, video, or text chat, or other communication modes or applications.

In some implementations, any of client devices 120, 122, 124, and/or 126 can provide one or more applications. For example, as shown in Fig. 1, client device 120 may provide app A 152, app B 154, a messaging application 156 (also referred to herein as messaging app 156), and a notification core 158. Other client devices may also include various applications. Different client devices may include different applications.

In some implementations, messaging application 156 may be a default messaging application. In these implementations, a modem of client device 120 of the client device may be configured to receive a message over a cellular connection, e.g., using Rich Communication Services (RCS) protocol from carrier messaging hub 162, and upon receipt of a message, automatically provide the message to messaging application 156. Messaging application 156 may perform various message handling functions. For example, messaging application 156 may display the message in a user interface. In another example, messaging application 156 may invoke notification core 158 and may provide the message to notification core 158. In these implementations, notification core 158 may perform one or more actions, e.g., decrypt the message to obtain message content (e.g., a notification), identify an application that the notification is addressed to (e.g., based on a token in the notification), forward the notification to the identified application, etc. In some implementations, messaging app 156 and notification core 158 may be implemented as a single application. In some implementations, messaging app 156 may be provided as part of an operating system of client device 120. In some implementations, notification core 158 may be provided as a separate application (or software package) that is distributed with client device 120 (e.g., pre-installed) or that can be downloaded to client device 120.

Applications 152-158 may be implemented using hardware and/or software of client device 120. In different implementations, one or more of applications 152-158 maybe a standalone client application, e.g., executed on any of client devices 120-124.

In various implementations, client device 120 may include one, two, or more applications, besides messaging app 156 and notification core 158. For example, such applications may provide various types of functionality, e.g., calendar, address book, e-mail, web browser, shopping, transportation (e.g., taxi, train, airline reservations, etc.), entertainment (e.g., a music player, a video player, a gaming application, etc.), social networking (e.g., chat, audio/video calling, sharing images/ video, etc.) and so on. In some implementations, one or more of applications 154 may be standalone applications that execute on client device 120. In some implementations, one or more of other applications 154 may access a server system, e.g., server system 102 and/or second server system 140, that provides data and/or functionality.

A user interface on a client device 120, 122, 124, and/or 126 can enable the display of user content and other content, including images, video, data, and other content as well as communications, privacy settings, notifications, and other data. Such a user interface can be displayed using software on the client device, software on the server device 104, and/or a combination of client software and server software executing on server device 104 and/or server system 140 , e.g., application software or client software in communication with server system 102 and/or server system 140. The user interface can be displayed by a display device of a client device or server device, e.g., a touchscreen or other display screen, projector, etc. In some implementations, application programs running on a server system can communicate with a client device to receive user input at the client device and to output data such as visual data, audio data, etc. at the client device.

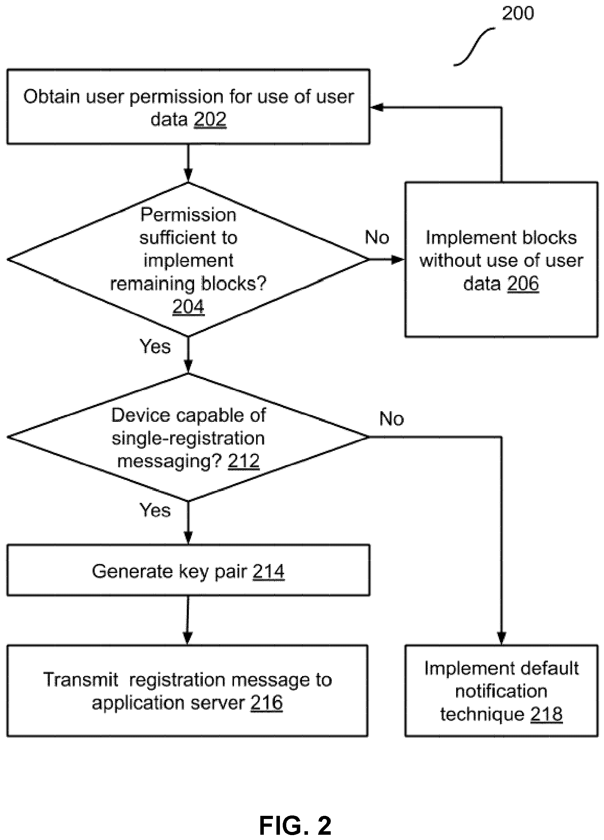

Fig. 2 is a flow diagram that illustrates an example method 200 to register a device to receive notifications, according to some implementations. In some implementations, method 200 can be implemented, for example, on one or more of client devices 120, 122, 124, or 126 as shown in Fig. 1. In described examples, the implementing system includes one or more digital processors or processing circuitry ("processors"), and one or more storage devices. In some implementations, different components of one or more servers (e.g., server device 104) and/or client devices can perform different blocks or other parts of the method 200.

In some implementations, the method 200, or portions of the method, can be initiated automatically by a system. For example, the method (or portions thereof) can be periodically performed, or performed based on one or more particular events or conditions, e.g., detecting installation or update of a particular application (e.g., App A, App B) on a client device, detecting that the client device is capable of RCS messaging, detecting that a prior registration of the client device has expired, a predetermined time period having expired since the last performance of method 200, and/or one or more other conditions occurring which can be specified in settings read in performing the method.

Method 200 may begin at block 202. In block 202, user permission is obtained to use user data in the implementation of method 200. For example, user data for which permission is obtained can include a user's phone number (associated with client device 120), token(s), identifiers of applications installed and executable on the client device 120, etc. The user is provided with options to selectively provide permission to access such user data. For example, a user may choose to provide permission to access all of the requested user data, any subset of the requested data, or none of the requested data. One or more blocks of the methods described herein may use such user data in some implementations. Block 202 is followed by block 204.

In block 204, it is determined whether the remainder of method 200 (blocks 212-218) as described herein can be implemented with the user-provided permissions, e.g., by accessing data as permitted by the user. If it is determined in block 204 that the permissions provided by the user in block 202 are insufficient to implement one or more of blocks 212-218, block 204 is followed by block 206, else block 204 is followed by block 212.

In block 206, user permission is requested to access user data. For example, if the user has denied permission for one or more portions of user data that may be used in blocks 212-218, a user interface may be provided for the user to provide permission for such portions of the user data. The user interface may indicate to the user how the data may be used and/or provide an indication that providing such permissions may benefit the user, e.g., by enabling registration of client device 120. Alternatively, e.g., if the user dismisses the request for access to user data or otherwise indicates their denial of permission, the method ends at block 206, such that no user data is accessed. In such a case, blocks 212-218 are not performed.

If the permission provided by the user is sufficient to implement blocks, block 204 is followed by block 212. The remainder of the method, e.g., blocks 212-218 are performed with selective access to user data as permitted by the user. In some implementations, the user may be provided with additional prompts to provide access to user data or to modify permissions.

In block 212, it is determined if the client device (e.g., client device 120) is capable of single-registration messaging. In some implementations, single-registration messaging may refer to message exchange by the client device with one or more other client devices, server devices, etc. via a wireless carrier system (e.g., wireless carrier system 160). Under single registration, the client device may send a registration message to the wireless carrier system which enables the wireless carrier system to register the client device (e.g., to store client device information sent in the registration message in a database) and deliver messages that originate at other client devices or server devices to the client device. For example, message delivery may be performed over Rich Communication Services (RCS) protocol. If it is determined that the client device is capable of single-registration messaging, block 212 is followed by block 214. Else, block 212 is followed by block 218.

In block 214, a cryptographic key pair is generated. The cryptographic key pair includes a private key and a public key. The key pair may be generated using any standard cryptographic techniques. In some implementations, the key pair may be generated using Pretty Good Privacy (PGP) encryption. The key pair may be usable such that data that is encrypted using the public key can only be decrypted using the private key. Upon generation, the private key is stored in local storage of client device 120 that generated the key pair. Block 214 may be followed by block 216.

In block 216, a registration message is generated and transmitted to a message delivery server (e.g., server device 104 that executes delivery application 108). In some implementations, the registration message includes the public key. In some implementations, the registration message also includes a recipient identifier. In other implementations, the public key and/or the recipient identifier may be sent to the message delivery server separately from the registration message. For example, the recipient identifier may be a token, e.g., received from a particular application (e.g., app A 152). In some implementations, the registration message also includes a telephone number associated with the client device that implements method 200 (e.g., client device 120). Once the client device is registered, a message delivery server (e.g., server 104 that executes delivery application 108) may deliver messages to the client device via a network access layer, e.g., over which the client device interacts with a wireless carrier system (160). The interaction between the client device and the wireless carrier system may be over a single IP security (IPSec) socket over an IP Multimedia Subsystem (IMS) of a public data network (PDN) operated by a wireless carrier.

In block 218, which is performed if it is determined at block 212 that the client device is not capable of single-registration messaging, default notification techniques are implemented, For example, app A 152 may be configured to receive messages over an Internet Protocol connection that requires the device to initiate and maintain a secure connection, e.g., using Transport Layer Security (TLS) with a message delivery server (e.g., server 104) to receive notifications generated by an application server (e.g., app A server 142, app B server 144) for an application executing on the client device, e.g., app A 152, app B 154.

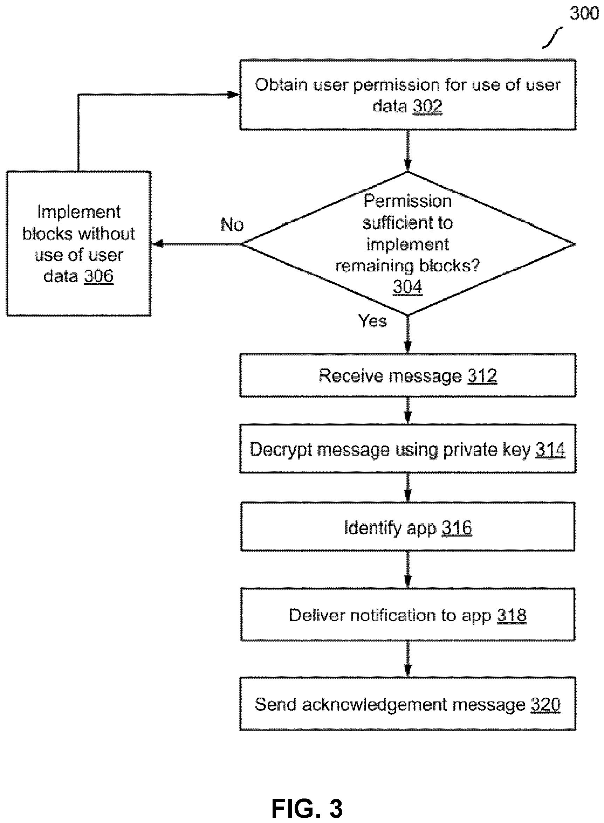

Fig. 3 is a flow diagram that illustrates an example method to receive notifications at a device, according to some implementations. In some implementations, method 300 can be implemented, for example, on one or more of client devices 120, 122, 124, or 126 as shown in Fig. 1. In described examples, the implementing system includes one or more digital processors or processing circuitry ("processors"), and one or more storage devices. In some implementations, different components of one or more servers (e.g., server device 104) and/or client devices can perform different blocks or other parts of the method 300.

Method 300 may begin at block 302. In block 302, user permission is obtained to use user data in the implementation of method 300. For example, user data for which permission is obtained can include a user's incoming messages, e.g., received from a wireless carrier via RCS protocol, token(s), identifiers of applications installed and executable on the client device 120, etc. The user is provided with options to selectively provide permission to access such user data. For example, a user may choose to provide permission to access all of the requested user data, any subset of the requested data, or none of the requested data. One or more blocks of the methods described herein may use such user data in some implementations. Block 302 is followed by block 304.

In block 304, it is determined whether the remainder of method 300 (blocks 312-320) as described herein can be implemented with the user-provided permissions, e.g., by accessing data as permitted by the user. If it is determined in block 304 that the permissions provided by the user in block 302 are insufficient to implement one or more blocks 312-320, block 304 is followed by block 306, else block 304 is followed by block 312.

In block 306, user permission is requested to access user data. For example, if the user has denied permission for one or more portions of user data that may be used in blocks 312-320, a user interface may be provided for the user to provide permission for such portions of the user data. The user interface may indicate to the user how the data may be used and/or provide an indication that providing such permissions may benefit the user, e.g., by enabling registration of client device 120. Alternatively, e.g., if the user dismisses the request for access to user data or otherwise indicates their denial of permission, the method ends at block 306, such that no user data is accessed. In such a case, blocks 312-320 are not performed.

In block 312, a message is received at a recipient device (e.g., any of client devices 120-126) from a wireless carrier. For example, the message may be received over RCS protocol. In some implementations, the message may be received as a session initiation protocol (SIP) message. In some implementations, the SIP message may be a SIP OPTIONS message. In some implementations, a notification (e.g., an app notification from an application server, sent via a message delivery server) may be included in the message, e.g., in the content body of the SIP OPTIONS message. In some implementations, the message may be received at a network access layer of the client device via a device modem of the client device in communication with the wireless carrier system. In these implementations, no active connection (e.g., a secure connection such as a TLS connection or other Internet Protocol connection) exists between the software application and the application server.

For example, the application server for a particular application, e.g., app A (152), app B (154), etc. may generate the notification and send it to a message delivery application (108) on a message delivery server. The message delivery server may perform a database lookup (e.g., in database 106) to determine if the notification is associated with a recipient device that is registered with the message delivery server (e.g., using method 200 as described with reference to Fig. 2). For example, the database may include a record that matches a recipient identifier, e.g., a token received in a registration message. The database record may include, e.g., a tuple of the form { token, device identifier, public key}, where the public key is included in a registration message and where the device identifier may be a telephone number received in the registration message. The token is usable to identify the app and the target device for the notification, and is known to the message delivery server as it receives it during a registration process (as described with reference to Fig. 2).

The message delivery server determines whether a recipient of the notification is associated with a public key based on determining that a recipient identifier in the notification (e.g., a token) matches the token in the notification received from the application server based on a database lookup. Further, the message delivery server identifies a public key associated with the recipient device (from the database tuple that includes the token). Message delivery server may generate a message by encrypting the notification with the public key. The message delivery server may transmit the message (that includes the encrypted notification) to a wireless carrier e.g., a wireless carrier system (160) that includes a carrier messaging hub (162), based on the device identifier e.g., a phone number or other identifier associated with the recipient device. In some implementations, transmission of the message from the message delivery server (104) to the wireless carrier system (160) may be performed using the RCS protocol. In these implementations, the message delivery server may format the message as a RCS message (e.g., to include appropriate message headers, etc.) prior to sending the message to the wireless carrier system. This can reduce the integration requirements of the wireless carrier system since the message received from the message delivery server can be forwarded to the client device using RCS protocol, without the wireless carrier system having to perform operations to format the message to comply with RCS. Further, this ensures that RCS protocol can be used for message delivery without any changes to the server that generates the notification, e.g., app A server 142, app B server 144, etc.

The wireless carrier (e.g., may in turn deliver the message to the recipient device. For example, carrier message hub (162) may transmit the message to the recipient device, e.g., using the RCS protocol. The message may be transmitted over a network access layer such that the recipient device receives the message without a wake-up operation. In some implementations, the message delivery server and the wireless carrier may maintain a peering connection for RCS which may allow message delivery that leverages a high reliability architecture of RCS in combination with a high performance network access layer.

In some implementations, a same token may be associated with a plurality of recipient devices. For example, the app that receives the notification may be a software application that can be installed on a mobile phone (configured for RCS messaging) and also on one or more other devices, e.g., a mobile phone not configured for RCS messaging, a laptop computer, tablet, or other device that does not include cellular communications capabilities etc. If one or more such recipient devices are associated with the token in the notification received from the application server, the message delivery server may also transmit the notification (without the encryption using the public key) to the one or more such devices. Block 312 may be followed by block 314.

In block 314, the received message is decrypted using a private key stored locally at the recipient device that received the message. Since the message delivery server encrypts the message using a public key identified based on a recipient identifier (e.g., token), the private key is part of a key pair along with the public key, and can be utilized to decrypt the message. Block 314 may be followed by block 316.

In block 316, a software application that executes on the recipient device that is associated with the decrypted message is identified. For example, identification of the app may be based on the token included in the message. Block 316 may be followed by block 318.

In block 318, the notification (the decrypted message) is delivered to the software application. For example, a messaging app and/or a notification core that decrypts the message can deliver the notification to the software application via any suitable mechanism, e.g., an application programming interface (API) call to the application. In some implementations, delivering the message may include waking up the specific application (if the application is inactive), starting the application (if it is not running), etc. Block 318 may be followed by block 320.

In block 320, an acknowledgement message is sent to the message delivery server. For example, the acknowledgement message may serve as an indication of one or more of: successful receipt of the message, successful decryption of the message, or successful delivery of the message to the software application. In some implementations, the acknowledgement message may be a "SIP 200 OK" message delivered over RCS protocol. The acknowledgment message may serve to indicate that the message was successfully received and/or handled at the recipient device. In some implementations, the message delivery server, upon receipt of the acknowledgement message, may send an indication to the application server (that generated the notification) that the notification was successfully delivered.

Various blocks of method 300 may be combined, split into multiple blocks, or be performed in parallel. For example, blocks 314 and 316 may be performed in parallel. Method 300, or portions thereof, may be repeated any number of times, e.g., receive any number of messages.

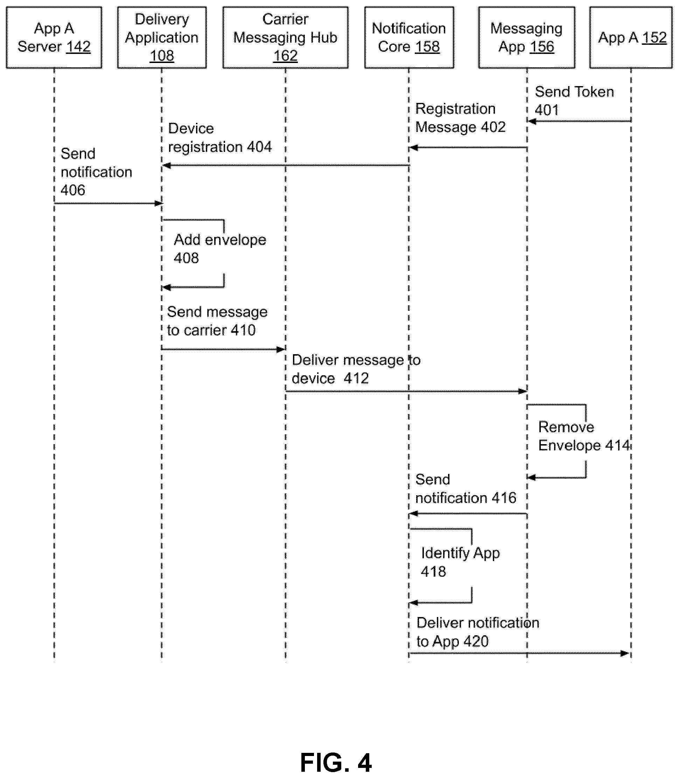

Fig. 4 is a flow diagram that illustrates device registration and delivery of a notification, according to some implementations. Notification delivery can take place in a network environment, e.g., network environment 100.

In a device registration process, App A 152 may send a token (401) to messaging app 156. For example, App A 152 may be configured to receive notification from App A server 142 via delivery application 108 using the token, e.g., the notification may include the token, which serves to identify the particular instance of App A 152 (executing on client device 120, rather than any other client device). In some implementations, the token may be generated by App A server 142 and provided to the particular instance App A 152 over the Internet.

In various implementations, messaging app 156 may be provided with the operating system, pre-installed by a device manufacturer, or may be installed by a user of the client device. Messaging app 156 may be configured to handle messages received from a wireless carrier, e.g., from a carrier messaging hub 162, and to send messages to other client devices via the wireless carrier. For example, messaging application 156 may be an application that can send and receive RCS protocol messages. Message exchange with the wireless carrier may take place via a device modem in communication with a wireless carrier system 160 and may utilize a network access layer of the device, rather than a higher layer in the network communications stack that applications may utilize to communicate over the Internet.

Messaging app 156 may generate and send a registration message (402) to notification core 158. In some implementations, the registration message may include the token, a device identifier (e.g., a telephone number associated with the client device), and a public key associated with the application (e.g., generated as explained with reference to Fig. 2).

In some implementations, notification core 158 may include notification handling software configured in communication with one or more apps installed on a client device 120. In some implementations, notification core 158 and messaging app 156 may be implemented as a single software application.

Notification core 158 may perform a device registration (404) with delivery application 108. For example, notification core 158 may send the registration message to the delivery application (108) over the Internet (e.g., using the Internet Protocol). Delivery application 108 may be implemented at a message delivery server (e.g., server device 104). In some implementations, the message delivery server may be configured in communication with one or more application servers, e.g., app A server (142), app B server (144), and/or additional app servers.

An application server (142) that receives the registration message may create (or update) a database record using the registration message. For example, the database record may include a tuple of the form {token, device identifier, public key}.

The application servers may be configured to generate notifications. For example, application servers may be associated with software applications that execute on a client device, such as an email application, a chat application, a game, a video calling application, etc. Notifications may be generated based on events in such applications. For example, an application server for an email application may generate a notification when a user receives a new email, a chat application may generate a notification in response to receipt of a chat message, etc. Application server for the respective application may generate a notification, e.g., to be provided via the application installed on a client device.

In the example illustrated in Fig. 4, app A server (142) may send (406) a notification that includes a token to delivery application 108. In some implementations, at least a portion of the notification (e.g., content to be shown to a user) may be encrypted prior to sending the notification to the delivery application. Delivery application 108 may perform a database lookup using the token in the notification to determine whether a recipient device is identified based on the token. For example, the database lookup may include matching the token in the notification with a token stored in the database to retrieve a device identifier and a public key.

If a recipient device is identified, delivery application 108 may add (410) an envelope to the notification to generate a message. For example, delivery application 108 may encrypt the notification using the public key associated with the recipient, e.g., as received in the registration message from the recipient device. Adding the envelope (encrypting the notification) can ensure secure delivery, since only the recipient device that has stored the corresponding private key can decrypt the message to retrieve the notification. In some implementations, transmission of the message from the message delivery server (104) to the wireless carrier system (160) may be performed using the RCS protocol. In these implementations, adding the envelope may include the message delivery server performing operations to format the message as a RCS message, e.g., to include appropriate message headers and/or other information, prior to sending the message to the wireless carrier system. Formatting the message as an RCS message prior to sending the message to the wireless carrier system has the advantage of reducing or eliminating the integration requirements of the wireless carrier system since the message received from the message delivery server can be forwarded to the client device using RCS protocol, without the wireless carrier system having to perform operations to format the message to comply with RCS.

Delivery application 108 may send the message (408) to the wireless carrier, e.g., to carrier messaging hub (162). In some implementations, a peering connection may be established between the message delivery server (104) and a wireless carrier system (160) to enable message delivery. Delivery application 108 may identify the wireless carrier system based on the device identifier (e.g., a telephone number) identified in the database lookup.

A carrier messaging hub 162 at wireless carrier system 160 may deliver (412) the message to the recipient device, e.g., to messaging app 156. For example, the message may be delivered over RCS protocol via a network access layer. Message delivery from the carrier messaging hub 162 to messaging app 156 may take place over a network access layer, e.g., the carrier system 160 may send a RCS message to the recipient device, where a modem of the recipient device may receive the message and alert the messaging app 156 that is configured to receive messages via the modem. In some implementations, the message may be sent as a SIP OPTIONS message. An example of a message is shown below:

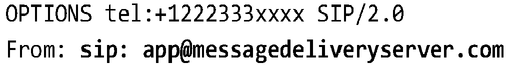

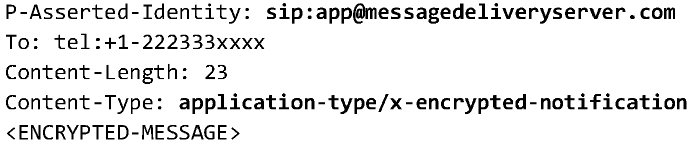

In the example message above, "+1222333xxxx" is a telephone number of the recipient device, "app@messagedeliveryserver.com" refers to a delivery application (e.g., delivery application 108). The "<ENCRYPTED-MESSAGE>" includes the message as encrypted by the delivery application.

In some implementations, the message may be sent as a SIP NOTIFY message. For example, a client device may utilize SIP SUBSCRIBE to request from a remote node (e.g., wireless carrier system 160) a current state and/or state updates. When such a request is received, the remote node may send a SIP NOTIFY message, e.g., in response to determination that the change in current state has occurred based on the receipt of a message that includes the notification from delivery application 108.

Upon receipt of the message, messaging app 156 may remove (414) the envelope to retrieve the notification content. Removing the envelope may include decrypting the message using the stored private key. After removal of the envelope, messaging app 156 may send (416) the notification to notification core (158).

Notification core 158 may identify (418) the app associated with the notification, e.g., based on matching the token in the notification with the token associated with a particular application, e.g., app A 152. Upon identifying the app, notification core may deliver (420) the notification to the app.

App A 152 may handle the notification in various ways. For example, if the notification is encrypted by the application server, handling the notification may include decrypting the notification. In these implementations, app A 152 may establish a shared secret with an app A server 142 using any conventional techniques, and utilize the shared secret for decrypting the notification. App A 152 may notify the user (e.g., "You have new email from Alyssa") based on the notification content, or may perform other operations.

In situations where delivery application 108 is unable to identify a recipient device e.g., when the app token in the notification does not match any database record, delivery application 108 may deliver the notification to app A via a conventional mechanism, e.g., over the Internet, that does not utilize the carrier messaging hub or the device identifier (telephone number). Further, delivery application 108 may deliver the notification to additional user devices, e.g.. if a user has the application executing on a device that is not capable of receiving the message via the wireless carrier such as a laptop or tablet computer, wearable device, etc. that is not coupled to a carrier network. In such cases, the token in the notification may be utilized to deliver the notification. For example, applications executing such devices (e.g., that do not match a database record) may be configured to establish a connection, e.g., a secure connection such as Transport Layer Security (TLS) connection, with the application server over the Internet to enable the application server to deliver the notification.

The described techniques address technical drawbacks of conventional notification techniques that establish and maintain a secure connection between a client device and a message delivery server that delivers notifications generated by an application server to the client device, or between the client device and the application server. Such notification techniques typically use an over the top (OTT) Transport Layer Security (TLS) connection over the Internet Public Data Network (PDN).

A technical problem with such a configuration is that network address translation (NAT) timeouts on a wireless carrier backend may occur and lead to closing of the secure connection due to inactivity, e.g., no interaction between the client device and the wireless carrier system over the secure connection for a period greater than a threshold set by the wireless carrier. To avoid such closure of connection, it is required that the client device (application that receives notifications) send a periodic keep-alive message. Sending such a message requires waking up the radio transmitter (and associated circuitry, including a client device modem). Such wake up and use of the radio transmitter can waste power. On battery-powered devices, such activity can drain the device battery. Further, the keep-alive messages can lead to cellular network congestion for the wireless carrier.

Techniques described herein utilize single-registration messaging between a client device (e.g., a mobile phone or other cellular communications device) and a wireless carrier system to deliver messages (e.g., that include app notifications). For example, the Rich Communication Services (RCS) protocol may be used for message delivery.

Wireless carriers typically share the client device registration (e.g., for communication between the client device and the wireless carrier system via Voice-over-LTE (Long Term Evolution) and RCS registration over a single IP Security (IPSec) socket over the IP Multimedia (core network) Subsystem PDN (IMS PDN). The client device maintains the connection to the IMS network for cellular communications.

Per techniques described herein, upon successful device registration (as described with reference to Figs. 2 and 4), such a connection is utilized for message delivery to applications on a client device (as described with reference to Figs. 3 and 4). By eliminating the overhead of establishing a TLS (or other secure OTT connection) and keeping it alive, the described techniques eliminate the need to periodically wake up the client device or send messages, thereby lowering power consumption, improving battery life, and reducing network congestion on the wireless (cellular) network. Also, the described techniques can improve reliability and performance of notification delivery when the client device has sub-optimal Internet connectivity.

Further, an important advantage of the IMS network is that it does not have network address translation and is deployed over Internet Protocol version 6 (IPv6). The described techniques make advantageous use of this feature of the IMS PDN by performing device registration that allows delivery of app notifications reliably. A technical problem with message delivery via IMS PDN is that IMS PDN is often deployed in a firewalled environment, that disallows direct connection to application servers and/or message delivery servers. Further, a device operating system of a client device may have limited exposure to the IMS PDN, as this connection may be managed by client device hardware, e.g., the device modem. The described techniques overcome this problem by performing device registration and using a database of registered devices that includes information such as tokens, device identifier, and a public key.

Further, the described techniques advantageously use public key cryptography to ensure that app notifications are sent securely over the wireless carrier network, without requiring establishment of a secure OTT connection. In particular, a client device provides a public key for use by a message delivery server (or other server that generates the notification) to encrypt a notification. The encrypted message can be sent over a regular communication channel (e.g., unencrypted) without compromising the security of the message content (e.g., app notification). A private key that is stored securely on the client device is utilized to decrypt the message, retrieve the notification, and provide it to a respective application on the client device.

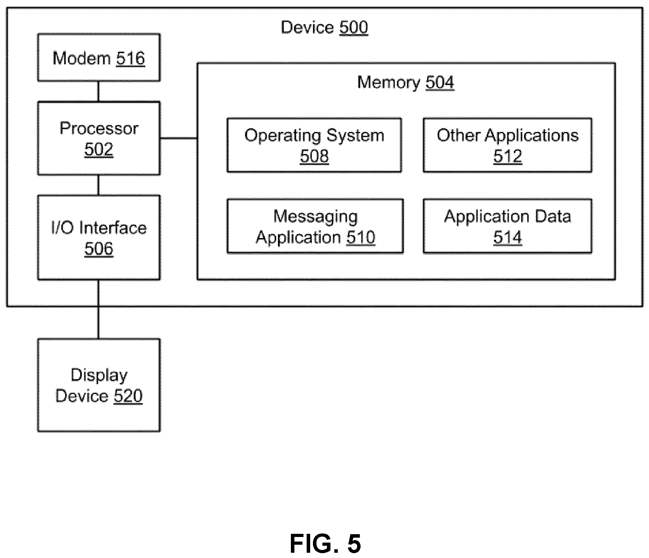

Fig. 5 is a block diagram of an example device 500 which may be used to implement one or more features described herein. In one example, device 500 may be used to implement a client device, e.g., any of client devices 120-126 shown in Fig. 1. Alternatively, device 500 can implement a server device, e.g., server device 104, or a wireless carrier system 160. In some implementations, device 500 may be used to implement a client device, a server device, or both client and server devices. Device 500 can be any suitable computer system, server, or other electronic or hardware device as described above.

One or more methods described herein can be run in a standalone program that can be executed on any type of computing device, a program run on a web browser, a mobile application ("app") run on a mobile computing device (e.g., cell phone, smart phone, tablet computer, wearable device (wristwatch, armband, jewelry, headwear, virtual reality goggles or glasses, augmented reality goggles or glasses, head mounted display, etc.), laptop computer, server computer, etc.).

In some implementations, device 500 includes a processor 502, a memory 504, input/output (I/O) interface 506, and a modem 516. Processor 502 can be one or more processors and/or processing circuits to execute program code and control basic operations of the device 500. A "processor" includes any suitable hardware system, mechanism or component that processes data, signals or other information. A processor may include a system with a general-purpose central processing unit (CPU) with one or more cores (e.g., in a single-core, dual-core, or multicore configuration), multiple processing units (e.g., in a multiprocessor configuration), a graphics processing unit (GPU), a field-programmable gate array (FPGA), an application-specific integrated circuit (ASIC), a complex programmable logic device (CPLD), dedicated circuitry for achieving functionality, a special-purpose processor to implement neural network model-based processing, neural circuits, processors optimized for matrix computations (e.g., matrix multiplication), or other systems.

In some implementations, processor 502 may include one or more co-processors that implement neural-network processing. In some implementations, processor 502 may be a processor that processes data to produce probabilistic output, e.g., the output produced by processor 502 may be imprecise or may be accurate within a range from an expected output. Processing need not be limited to a particular geographic location, or have temporal limitations. For example, a processor may perform its functions in "real-time," "offline," in a "batch mode," etc. Portions of processing may be performed at different times and at different locations, by different (or the same) processing systems. A computer may be any processor in communication with a memory.

Memory 504 is typically provided in device 500 for access by the processor 502, and may be any suitable processor-readable storage medium, such as random access memory (RAM), read-only memory (ROM), Electrical Erasable Read-only Memory (EEPROM), Flash memory, etc., suitable for storing instructions for execution by the processor, and located separate from processor 502 and/or integrated therewith. Memory 504 can store software operating on the server device 500 by the processor 502, including an operating system 508, messaging application 510 (e.g., which may be the same as messaging application 156 of Fig. 1), other applications 512, and application data 514. Messaging application 510 may be configured as a default application for carrier messaging, such that upon receipt of a message over the wireless carrier network (e.g., at modem 516 over a network access layer), messaging application 510 is automatically invoked.

Other applications 512 may include applications such as a data display engine, web hosting engine, map application, image display engine, notification engine (e.g., that may implement notification core 158), social networking engine, etc. In some implementations, the messaging application 510 can include instructions that enable processor 502 to perform functions described herein, e.g., some or all of the method of Figs. 2, 3 or 4. Other applications 512 (which may include app A 152 and app B 154) can include, e.g., map applications, image editing applications, media display applications, communication applications, web hosting engines or applications, notification engines, media sharing applications, etc. One or more methods disclosed herein can operate in several environments and platforms, e.g., as a stand-alone computer program that can run on any type of computing device, as a web application having web pages, as a mobile application ("app") run on a mobile computing device, etc.

Any software in memory 504 can alternatively be stored on any other suitable storage location or computer-readable medium. In addition, memory 504 (and/or other connected storage device(s)) can store one or more messages, one or more taxonomies, electronic encyclopedia, dictionaries, digital maps, thesauruses, knowledge bases, message data, grammars, user preferences, and/or other instructions and data used in the features described herein. Memory 504 and any other type of storage (magnetic disk, optical disk, magnetic tape, or other tangible media) can be considered "storage" or "storage devices."

I/O interface 506 can provide functions to enable interfacing the server device 500 with other systems and devices. Interfaced devices can be included as part of the device 500 or can be separate and communicate with the device 500. For example, network communication devices, storage devices (e.g., memory and/or database), and input/output devices can communicate via I/O interface 506. In some implementations, the I/O interface can connect to interface devices such as input devices (keyboard, pointing device, touchscreen, microphone, camera, scanner, sensors, etc.) and/or output devices (display devices, speaker devices, printers, motors, etc.).

Some examples of interfaced devices that can connect to I/O interface 506 can include one or more display devices 520 that can be used to display content, e.g., images, video, and/or a user interface of an application as described herein. Display device 520 can be connected to device 500 via local connections (e.g., display bus) and/or via networked connections and can be any suitable display device. Display device 520 can include any suitable display device such as an LCD, LED, or plasma display screen, CRT, television, monitor, touchscreen, 3-D display screen, or other visual display device. Display device 520 may also act as an input device, e.g., a touchscreen input device. For example, display device 520 can be a flat display screen provided on a mobile device, multiple display screens provided in glasses or a headset device, or a monitor screen for a computer device.

The I/O interface 506 can interface to other input and output devices. Some examples include one or more cameras which can capture images and/or detect gestures. Some implementations can provide a microphone for capturing sound (e.g., as a part of captured images, voice commands, etc.), a radar or other sensors for detecting gestures, audio speaker devices for outputting sound, or other input and output devices.

The modem 516 may be a cellular modem that is configured to communicate with a wireless carrier system (e.g., wireless carrier system 160). In different implementations, modem 516 may be implemented on a same chip or die as processor 502, or may be implemented as separate hardware. Modem 516 may be capable of communication with the wireless carrier system over a network access layer. In some implementations, modem 516 may be configured to send messages that are provided by messaging application 510, e.g., over RCS protocol. In some implementations, modem 516 may be configured to receive messages, e.g., over RCS protocol, and provide the messages to messaging application 510.

For ease of illustration, Fig. 5 shows one block for each of processor 502, memory 504, I/O interface 506, and software blocks 508, 510, and 512. These blocks may represent one or more processors or processing circuitries, operating systems, memories, I/O interfaces, applications, and/or software modules. In other implementations, device 500 may not have all of the components shown and/or may have other elements including other types of elements instead of, or in addition to, those shown herein. While some components are described as performing blocks and operations as described in some implementations herein, any suitable component or combination of components of environment 100, device 500, similar systems, or any suitable processor or processors associated with such a system, may perform the blocks and operations described.

Computing device 500 may include additional hardware and/or software that is now shown in Fig. 5, in various configurations. For example, when computing device 500 is utilized to implement a wireless carrier system, it may implement a carrier messaging hub (162), and may include wireless communication hardware. In another example, when computing device 500 is utilized to implement a message delivery server, computing device 500 may implement a delivery application 108 and/or store a database 106.

Methods described herein can be implemented by computer program instructions or code, which can be executed on a computer. For example, the code can be implemented by one or more digital processors (e.g., microprocessors or other processing circuitry) and can be stored on a computer program product including a non-transitory computer-readable medium (e.g., storage medium), such as a magnetic, optical, electromagnetic, or semiconductor storage medium, including semiconductor or solid state memory, magnetic tape, a removable computer diskette, a random access memory (RAM), a read-only memory (ROM), flash memory, a rigid magnetic disk, an optical disk, a solid-state memory drive, etc. The program instructions can also be contained in, and provided as, an electronic signal, for example in the form of software as a service (SaaS) delivered from a server (e.g., a distributed system and/or a cloud computing system). Alternatively, one or more methods can be implemented in hardware (logic gates, etc.), or in a combination of hardware and software. Example hardware can be programmable processors (e.g. Field-Programmable Gate Array (FPGA), Complex Programmable Logic Device), general purpose processors, graphics processors, Application Specific Integrated Circuits (ASICs), and the like. One or more methods can be performed as part of or component of an application running on the system, or as an application or software running in conjunction with other applications and operating system.

Although the description has been described with respect to particular implementations thereof, these particular implementations are merely illustrative, and not restrictive. Concepts illustrated in the examples may be applied to other examples and implementations.

Further to the descriptions above, a user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

Note that the functional blocks, operations, features, methods, devices, and systems described in the present disclosure may be integrated or divided into different combinations of systems, devices, and functional blocks as would be known to those skilled in the art. Any suitable programming language and programming techniques may be used to implement the routines of particular implementations. Different programming techniques may be employed, e.g., procedural or object-oriented. The routines may execute on a single processing device or multiple processors. Although the steps, operations, or computations may be presented in a specific order, the order may be changed in different particular implementations. In some implementations, multiple steps or operations shown as sequential in this specification may be performed at the same time.

## Claims

1. A computer-implemented method comprising:
receiving, at a recipient device, a message from a wireless carrier, the message including a notification from an application server;
decrypting the message using a private key stored locally at the recipient device;
identifying a software application that executes on the recipient device that is associated with the decrypted message, wherein the decrypted message includes the notification; and
delivering the decrypted message to the software application.

2. The computer-implemented method of claim 1, wherein the recipient device is a wireless device coupled to a cellular network operated by the wireless carrier, and wherein the receiving the message includes receiving the message over Rich Communication Services (RCS) protocol.

3. The computer-implemented method of claim 1 or 2, further comprising, after the decrypting, sending an acknowledgment message to the wireless carrier.

4. The computer-implemented method of claim 1, 2 or 3, further comprising, prior to receiving the message:
generating, at the recipient device, a cryptographic key pair that includes a public key and a private key;
storing the private key in local storage of the recipient device; and
transmitting a registration message that includes the public key to a message delivery server over the Internet.

5. The computer-implemented method of claim 4, wherein the registration message further includes a token associated with the software application, and wherein identifying the software application is based on determining that a received token in the decrypted message matches the token associated with the software application.

6. A device comprising:
a processor;
a modem operable to couple the device to a wireless carrier; and
a memory coupled to the processor, with instructions stored thereon that, when executed by the processor, cause the processor to perform operations comprising:
receiving a message from a wireless carrier, the message including a notification from an application server;
decrypting the message using a private key;
identifying a software application that is associated with the decrypted message, wherein the decrypted message includes the notification; and
delivering the decrypted message to the software application.

7. The device of claim 6, wherein the device is coupled to a cellular network operated by the wireless carrier, and wherein receiving the message includes receiving the message over Rich Communication Services (RCS) protocol.

8. The method of claim 2 or the device of claim 10, wherein the message is received as a session initiation protocol (SIP) message, and optionally wherein the SIP message is a SIP OPTIONS message, and the notification is included in content body of the SIP OPTIONS message

9. The method of claim 1, 2 or 8 or the device of claim 6, 7 and 8, wherein the message is received at a network access layer of the device via the modem in communication with the wireless carrier, and wherein no active connection exists between the software application and the application server.

10. The device of any one of claims 6 to 9, wherein the operations further comprise, prior to receiving the message:
generating a cryptographic key pair that includes a public key and a private key;
storing the private key in local storage of the device; and
transmitting a registration message that includes the public key to a message delivery server over the Internet.

11. A computer-implemented method to deliver a message, the method comprising:
receiving, at a message delivery server, a notification from an application server;
determining that a recipient of the notification is associated with a public key stored at the message delivery server, the public key associated with a recipient device;
responsive to determination that the recipient is associated with the public key, generating the message by encrypting the notification with the public key; and
transmitting the message to a wireless carrier for delivery to the recipient device.

12. The computer-implemented method of claim 11, wherein the recipient device is a wireless device coupled to a cellular network operated by the wireless carrier, and wherein the delivery of the message to the recipient is over Rich Communication Services (RCS) protocol, and optionally wherein the message delivery server and the wireless carrier maintain a peering connection for RCS.

13. The computer-implemented method of claim 11 or 12, further comprising transmitting the notification to one or more other recipient devices over the Internet.

14. The computer-implemented method of claim 11, 12 or 13, further comprising, prior to receiving the notification:
receiving, at the message delivery server, a registration message from the recipient device, wherein the registration message includes the public key and a recipient identifier.

15. The computer-implemented method of claim 14, wherein determining that the recipient of the notification is associated with the public key is based on determining that the recipient matches the recipient identifier and/or wherein the recipient device executes a software application and wherein the recipient identifier is a token associated with the software application.

## Amended claims

### Amended claims in accordance with Rule 137(2) EPC.

1. A computer-implemented method comprising:
receiving (312,412), at a recipient device (120), a message from a wireless carrier (160), the message including a notification from an application server (142,144);
decrypting (314,414) the message using a private key stored locally at the recipient device (120);
identifying (316,418) a software application (152) that executes on the recipient device (120) that is associated with the decrypted message, wherein the decrypted message includes the notification; and
delivering (318,420) the decrypted message to the software application (152);
wherein the recipient device (120) is a wireless device coupled to a cellular network operated by the wireless carrier (160), and wherein the receiving the message includes receiving the message over Rich Communication Services (RCS) protocol over the cellular network.

2. The computer-implemented method of claim 1, further comprising, after the decrypting, sending (320) an acknowledgment message to the wireless carrier.

3. The computer-implemented method of claim 1 or 2, further comprising, prior to receiving the message:
generating (214), at the recipient device, a cryptographic key pair that includes a public key and a private key;
storing the private key in local storage of the recipient device (120); and
transmitting (216) a registration message that includes the public key to a message delivery server over the Internet.

4. The computer-implemented method of claim 3, wherein the registration message further includes a token associated with the software application, and wherein identifying the software application is based on determining that a received token in the decrypted message matches the token associated with the software application.

5. A device (120,500) comprising:
a processor (502);
a modem (516) operable to couple the device to a wireless carrier (160); and
a memory (504) coupled to the processor, with instructions stored thereon that, when executed by the processor (502), cause the processor (502) to perform operations comprising:
receiving (312,412) a message from a wireless carrier (160), the message including a notification from an application server (142,144);
decrypting (314,414) the message using a private key;
identifying (316,418) a software application (152) that is associated with the decrypted message, wherein the decrypted message includes the notification; and delivering (318,420) the decrypted message to the software application (152);
wherein the message is received at a network access layer of the device (120,500) via the modem (516) in communication with the wireless carrier (160), and wherein no active connection exists between the software application (152) and the application server (142,144).

6. The device of claim 5, wherein the device is coupled to a cellular network operated by the wireless carrier (160), and wherein receiving (312,412) the message includes receiving the message over Rich Communication Services (RCS) protocol over the cellular network.

7. The method of claim 1 or the device of claim 5, wherein the message is received as a session initiation protocol (SIP) message, and optionally wherein the SIP message is a SIP OPTIONS message, and the notification is included in content body of the SIP OPTIONS message

8. The device of any one of claims 5 to 7, wherein the operations further comprise, prior to receiving the message:
generating (214) a cryptographic key pair that includes a public key and a private key;
storing the private key in local storage of the device (120,500); and
transmitting a registration message that includes the public key to a message delivery server over the Internet.

9. A computer-implemented method to deliver a message, the method comprising:
receiving (312,412), at a message delivery server, a notification from an application server (142,144);
determining that a recipient of the notification is associated with a public key stored at the message delivery server, the public key associated with a recipient device (120);
responsive to determination that the recipient is associated with the public key, generating the message by encrypting the notification with the public key; and
transmitting the message to a wireless carrier (160) for delivery to the recipient device (120);
wherein the recipient device (120) is a wireless device coupled to a cellular network operated by the wireless carrier (160), and wherein the delivery of the message to the recipient is over Rich Communication Services (RCS) protocol over the cellular network.

10. The computer-implemented method of claim 9 wherein the message delivery server and the wireless carrier maintain a peering connection for RCS.

11. The computer-implemented method of claim 9 or 10, further comprising transmitting the notification to one or more other recipient devices over the Internet.

12. The computer-implemented method of claim 9, 10 or 11, further comprising, prior to receiving the notification:
receiving, at the message delivery server, a registration message from the recipient device (120), wherein the registration message includes the public key and a recipient identifier.

13. The computer-implemented method of claim 12, wherein determining that the recipient of the notification is associated with the public key is based on determining that the recipient matches the recipient identifier and/or wherein the recipient device executes a software application and wherein the recipient identifier is a token associated with the software application.
